# EUROPÄISCHE PATENTSCHRIFT

(11) **EP 2 897 147 B1**
(45) Veröffentlichungstag und Bekanntmachung des Hinweises auf die Patenterteilung: **19.04.2017**
(21) Anmeldenummer: 14198576.2
(22) Anmeldetag: 17.12.2014
(51) Int. Cl.: H01H 27/06, B60R 21/015, E05B 27/00

(54) **Schlüsselschalter**
Key switch
Interrupteur à clé

(30) Priorität: 17.01.2014 DE 102014200842
(43) Veröffentlichungstag der Anmeldung: 22.07.2015
(73) Patentinhaber: Hartmann-exact KG, 73614 Schorndorf (DE)
(72) Erfinder: Stoll, Claus, 71522 Backnang (DE); Behrens, Ralf, 73614 Schorndorf (DE); Salzburg, Marcel, 73061 Ebersbach (DE)
(74) Vertreter: BRP Renaud & Partner mbB Rechtsanwälte Patentanwälte Steuerberater

(56) Entgegenhaltungen:
- DE-A1- 2 461 395
- JP-A- H06 131 946
- US-A- 5 866 954
- US-A- 6 133 648
- DATABASE WPI Section EI, Week 200839 Thomson Scientific, London, GB; Class X22, AN 2008-G18421 XP002739984, -& KR 100 776 586 B1 (DAESUNG ELECTRIC CO LTD) 15. November 2007 (2007-11-15)

## Beschreibung

Die vorliegende Erfindung betrifft einen Schlüsselschalter für sicherheitsrelevante Anwendungen, insbesondere zur Deaktivierung eines Airbags, mit den Merkmalen des Oberbegriffs des Anspruchs 1.

Ein Schlüsselschalter ist ein Schalter, der mit Hilfe eines dazu passenden Schlüssels betätigt, also zwischen wenigstens zwei verschiedenen Schaltstellungen umgeschaltet werden kann.

Ein Schlüsselschalter der eingangs genannten Art ist beispielsweise aus der DE 102 15 940 B4 bekannt und umfasst ein Schaltergehäuse sowie einen Schließzylinder, der im Schaltergehäuse um eine Drehachse drehbar angeordnet ist. Die Drehachse definiert dabei eine Axialrichtung für den gesamten Schlüsselschalter. Dabei erstreckt sich die Axialrichtung parallel zur Drehachse. Der Schließzylinder weist eine axiale, also in der Axialrichtung offene Schlüsselöffnung zum axialen Einführen des Schlüssels auf. Ferner enthält der Schließzylinder einen zur Schlüsselöffnung offenen Einführkanal, in den der Schlüssel eindringt, wenn er durch die Schlüsselöffnung hindurchgeführt ist. Außerdem ist der Schließzylinder mit zwei einander diametral gegenüberliegenden, zum Einführkanal offenen, radialen, also bezüglich der Drehachse in einer Querrichtung offenen Führungsöffnungen ausgestattet. Im Schaltergehäuse ist ferner ein Riegelelement angeordnet, das mittels des Schlüssels von einer Verriegelungsstellung in eine Entriegelungsstellung überführbar ist und das mittels zwei Federelementen in die Verriegelungsstellung angetrieben ist. Der Schließzylinder ist bei in die Entriegelungsstellung verstelltem Riegelelement mittels des Schlüssels zwischen einer ersten Schaltstellung und einer zweiten Schaltstellung drehend verstellbar. Dagegen ist der Schließzylinder durch das in die Verriegelungsstellung verstellte Riegelelement gegen ein Verdrehen relativ zum Schaltergehäuse gesichert.

Durch diese Bauweise des Schlüsselschalters ist gewährleistet, dass nur bei der Verwendung eines passenden Schlüssels der Schließzylinder entriegelt und von der einen Schaltstellung in die andere Schaltstellung verstellt werden kann.

Beim vorstehend genannten, bekannten Schlüsselschalter ist das Riegelelement in den beiden radialen Führungsöffnungen quer zur Längsachse, also parallel zu einer Querachse linear geführt, derart, dass das Riegelelement relativ zum Schließzylinder und somit auch relativ zum Schaltergehäuse parallel zu dieser Querrichtung verstellbar angeordnet ist. In der Verriegelungsstellung steht eine Riegelkontur des Riegelelements radial nach außen über den Schließzylinder vor und greift in eine dazu passende Riegelaufnahme ein, wodurch die Riegelkontur in der Umfangsrichtung am Schaltergehäuse fixiert ist. Somit lässt sich der Schließzylinder in der Verriegelungsstellung des Riegelelements nicht mehr verdrehen. Gleichzeitig ragt in der Verriegelungsstellung eine am Riegelelement ausgebildete Einführschräge durch eine der Führungsöffnungen in den Einführkanal hinein. Beim Einführen des Schlüssels durch die Schlüsselöffnung in den Einführkanal trifft ein axial vorausgehendes, also stirnseitiges Ende des Schlüssels auf die Einführschräge und kann dadurch das Riegelelement quer zur Axialrichtung verdrängen, wodurch es in seine Entriegelungsstellung überführt wird. Es hat sich gezeigt, dass häufige Betätigungen des Schlüsselschalters dazu führen können, dass sich an der Einführschräge aufgrund der Wechselwirkungen mit dem stirnseitigen Ende des Schlüssels Abnutzungserscheinungen in Form von Abrieb einstellen können. Übermäßiger Abrieb kann dabei die Funktionsfähigkeit der Einführschräge beeinträchtigen, wodurch die Leichtgängigkeit des Schlüsselschalters beeinträchtigt wird. Als weiteres Beispiel wird das US-Patent No. 5 866 954 genannt, das einen Schlüsselschalter mit einem Schaltergehäuse, einem Schließzylinder und einem Riegelelement offenbart, wobei das Riegelelement relativ zum Schließzylinder verdrehbar ist. Die vorliegende Erfindung beschäftigt sich mit dem Problem, für einen Schlüsselschalter der eingangs genannten Art eine verbesserte Ausführungsform anzugeben, die sich insbesondere durch eine möglichst lange und dauerhaft zuverlässige Funktionssicherheit auszeichnet.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, das Riegelelement im Schaltergehäuse so anzuordnen, dass es für seine Verstellung zwischen der Entriegelungsstellung und der Verriegelungsstellung eine parallel zur Drehachse orientierte, also axiale Hubbewegung durchführt. Somit ist das Riegelelement relativ zum Schaltergehäuse und relativ zum Schließzylinder axial hubverstellbar angeordnet. Da beim erfindungsgemäßen Schlüsselschalter somit ein radiales bzw. quer zur Axialrichtung orientiertes Verdrängen des Riegelelements über eine Einführschräge entfällt, unterbleibt auch ein abriebbehaftetes Abgleiten des Schlüssels an einer solchen Einführschräge. Dementsprechend kann die Abnutzung des Riegelelements durch die Betätigung des Schlüsselschalters entsprechend reduziert werden. In der Folge verlängert sich die Dauerhaltbarkeit des Schlüsselschalters, so dass er für eine lange Lebenszeit leichtgängig und zuverlässig funktioniert.

Das Riegelelement ist permanent, also unabhängig davon, ob es sich in seiner Entriegelungsstellung oder in seiner Verriegelungsstellung befindet, bezüglich der Drehachse drehfest mit dem Schließzylinder gekoppelt und relativ zum Schließzylinder axial verstellbar. Im Unterschied dazu ist das Riegelelement in der Entriegelungsstellung relativ zum Schaltergehäuse um die Drehachse verdrehbar, während es in der Verriegelungsstellung relativ zum Schaltergehäuse bezüglich der Drehachse drehfest angeordnet ist. Dabei ist das Riegelelement relativ zum Schaltergehäuse stets, also wieder unabhängig von der jeweiligen Stellung des Riegelelements axial verstellbar. Erfindungsgemäß weist das Riegelelement zumindest eine Mitnehmerkontur auf, die radial durch eine am Schließzylinder ausgebildete, zum Einführkanal offene radiale Führungsöffnung in den Einführkanal vorsteht, wobei das Riegelelement über die jeweilige Mitnehmerkontur in der jeweiligen Führungsöffnung am Schließzylinder parallel zur Drehachse hubverstellbar geführt ist und gegen Verdrehen um die Drehachse gesichert ist. Die jeweilige Mitnehmerkontur erfüllt somit gleichzeitig mehrere Funktionen. Zum einen ermöglicht sie eine Axialführung des Riegelelements am Schließzylinder. Zum anderen kommt ein beim Einführen des Schlüssels vorangehendes stirnseitiges Ende des Schlüssels mit der in den Einführkanal hineinragenden Mitnehmerkontur in Kontakt, wobei der Schlüssel bei Fortsetzung der Einführbewegung die Mitnehmerkontur und somit das gesamte Riegelelement in der Axialrichtung mitnimmt. Somit wird das Riegelelement über die jeweilige Mitnehmerkontur mittels des Schlüssels von der Verriegelungsstellung in die Entriegelungsstellung überführt. Für das Riegelelement ergeben sich durch diese Maßnahme ein vereinfachter Aufbau sowie eine relativ hohe Funktionssicherheit.

Gemäß einer vorteilhaften Weiterbildung kann die jeweilige Mitnehmerkontur wenigstens zwei verschiedene Mitnehmergeometrien aufweisen, die an verschiedene Schlüssel angepasst sind und die verschiedene Einführtiefen für den jeweiligen Schlüssel definieren, die der jeweilige Schlüssel zunächst in die Schlüsselöffnung bzw. in den Einführkanal eingeführt werden muss, bevor er über die jeweilige Mitnehmergeometrie das Riegelelement beim weitergehenden Einführen des Schlüssels mitnehmen kann. Durch diese Bauform kann für unterschiedliche Schlüssel, die sich insbesondere durch unterschiedliche Außengeometrien voneinander unterscheiden, jeweils eine zuverlässige Führung bzw. Lagefixierung am Riegelelement realisiert werden, um beim Hubverstellen des Riegelelements Relativbewegungen zwischen dem Schlüssel und dem Riegelelement zu minimieren. Somit führt diese Maßnahme auch bei verschiedenen Schlüsseln zu einem reduzierten Abrieb am Riegelelement.

Damit der Schlüsselschalter nur mit Hilfe von vorbestimmten Schlüsseln betätigt werden kann, besitzt die Schlüsselöffnung eine entsprechende Öffnungsgeometrie, die an die Umfangsgeometrien der vorgesehenen Schlüssel angepasst ist.

Gemäß einer anderen vorteilhaften Ausführungsform kann das Riegelelement zumindest eine Riegelkontur aufweisen, die radial in eine Riegelkulisse eingreift, die an einer dem Schließzylinder zugewandten Innenseite des Schaltergehäuses ausgebildet ist. Die jeweilige Riegelkulisse weist dabei zwei in der Umfangsrichtung voneinander beabstandete, den beiden Schaltstellungen zugeordnete Eingriffsbereiche auf. Dementsprechend kann das Riegelelement in beiden Schaltstellungen des Schließzylinders in seine Verriegelungsstellung überführt werden, um den Schließzylinder gegen ein Verdrehen relativ zum Schaltergehäuse zu verriegeln bzw. zu sichern. Dementsprechend kann die jeweilige Riegelkontur in der Verriegelungsstellung in der einen Schaltstellung in den einen Eingriffsbereich und in der anderen Schaltstellung in den anderen Eingriffsbereich eingreifen, so dass sie in dem jeweiligen Eingriffsbereich gegen ein Verdrehen relativ zum Schaltergehäuse um die Drehachse gesichert ist.

Entsprechend einer vorteilhaften Weiterbildung kann die jeweilige Riegelkulisse in der Umfangsrichtung zwischen den beiden Eingriffsbereichen einen zu den Eingriffsbereichen axial versetzten Ablenkbereich aufweist, der die daran abgleitende Riegelkontur je nach Drehrichtung dem einen oder dem anderen Eingriffsbereich zuführt. Entlang des Ablenkbereich kann somit die Riegelkontur sicher von dem einen Eingriffsbereich in den anderen Eingriffsbereich überführt werden, wobei das Riegelelement hierzu in seine Entriegelungsstellung überführt werden muss, um den axialen Versatz zwischen den Eingriffsbereichen und dem Ablenkbereich zu überwinden. Hierdurch arbeitet der hier vorgestellte Mechanismus sehr zuverlässig. Grundsätzlich kann sich der Ablenkbereich in einer senkrecht zur Axialrichtung verlaufenden Ebene erstrecken.

Gemäß einer vorteilhaften Ausführungsform kann der jeweilige Ablenkbereich zwei gegenläufige Rampen besitzen, wodurch der Ablenkbereich im Wesentlichen keilförmig ausgestaltet ist. Die beiden Rampen gehen dabei von einer gemeinsamen Kante aus und erstrecken sich sowohl in der Umfangsrichtung als auch in der Axialrichtung. Ferner sind die Rampen des Ablenkbereichs so gestaltet, dass die jeweilige Riegelkontur daran abgleiten kann, wobei sie über die jeweilige Rampe dem jeweiligen Eingriffsbereich zugeführt wird. Mit anderen Worten, die Rampen des Ablenkbereichs bilden Einführhilfen für das Einführen der Riegelkontur in den jeweiligen Eingriffsbereich.

Alternativ dazu kann gemäß einer anderen vorteilhaften Ausführungsform vorgesehen sein, dass der jeweilige Ablenkbereich nur eine Rampe besitzt, die sich in der Umfangsrichtung erstreckt, an dem einen Eingriffsbereich beginnt und an dem anderen Eingriffsbereich endet. Ferner ist auch diese eine Rampe des jeweiligen Ablenkbereichs so gestaltet, dass die jeweilige Riegelkontur daran abgleiten kann, wobei sie über die jeweilige Rampe dem jeweiligen Eingriffsbereich zugeführt wird. Mit anderen Worten, die Rampe des Ablenkbereichs bildet auch hier eine Einführhilfe für das Einführen der Riegelkontur in den jeweiligen Eingriffsbereich.

Gemäß einer anderen Weiterbildung kann der jeweilige Eingriffsbereich über einen axial verlaufenden Führungsbereich in den Ablenkbereich übergehen, so dass die z.B. an der jeweiligen Rampe abgleitende Riegelkontur durch den jeweiligen Führungsbereich axial in den zugehörigen Eingriffsbereich überführt wird. Über eine axiale Länge der Führungsbereiche wird gleichzeitig auch ein Mindesthub für das Riegelelement definiert, um den das Riegelelement axial relativ zum Schaltergehäuse verstellt werden muss, bevor es von seiner Verriegelungsstellung in seine Entriegelungsstellung gelangt. Solange sich die jeweilige Riegelkontur innerhalb eines derartigen Führungsbereichs befindet, ist das Riegelelement gegen ein Verdrehen gesichert. Erst wenn die Riegelkontur aus einem solchen Führungsbereich axial austritt und sich dementsprechend im Ablenkbereich befindet, ist ein Verdrehen des Riegelelements relativ zum Schaltergehäuse möglich, so dass erst dann die Entriegelungsstellung erreicht ist. Somit lässt sich über die genannten Führungsbereiche eine Mindesteinführtiefe für den jeweiligen Schlüssel definieren, die der Schlüssel in die Schlüsselöffnung bzw. in den Einführkanal eingeführt werden muss, bevor sich der Schließzylinder drehen lässt.

Die Riegelkulisse kann außerdem Endanschläge definieren, welche die maximale Verdrehbarkeit des Riegelelements relativ zum Schaltergehäuse und somit des Schließzylinders relativ zum Schaltergehäuse begrenzen. Zweckmäßig sind die Endanschläge axial fluchtend zu den Eingriffsbereichen bzw. den Führungsbereichen angeordnet, so dass das Riegelelement bei Erreichen seines jeweiligen Endanschlags durch axiale Hubverstellung, insbesondere angetrieben durch das jeweilige Federelement, einfach in den jeweiligen Eingriffsbereich überführt werden kann.

Bei einer anderen Weiterbildung kann vorgesehen sein, dass die jeweilige Riegelkontur keilförmig ausgestaltet ist und eine Keilkante sowie zwei davon ausgehende Keilflächen besitzt. Die Keilkante kann dabei der Schlüsselöffnung zugewandt sein, während die zuvor genannte Kante des Ablenkbereichs von der Schlüsselöffnung abgewandt ist. Da es höchst unwahrscheinlich ist, dass die Keilkante stabil an der Kante des Ablenkbereichs axial zur Anlage kommt, wird durch die Keilform der Riegelkontur in Verbindung mit der Keilform des Ablenkbereichs erreicht, dass die Riegelkontur beim Herausziehen des Schlüssels immer über die eine oder die andere Rampe abgleitet, so dass zum einen der Schließzylinder immer zuverlässig in die eine oder in die andere Schaltstellung verstellt wird und außerdem darin verriegelt wird. Somit liegen bei abgezogenem Schlüssel immer definierte und gesicherte Schaltstellungen vor. Alternativ dazu kann die jeweilige Riegelkontur zumindest an ihrer der Schlüsselöffnung zugewandten Seite konvex gekrümmt oder bogenförmig, insbesondere kreisbogenförmig, ausgestaltet sein, um eine möglichst kleine Kontaktfläche mit dem Ablenkbereich zu besitzen.

Gemäß einer besonders vorteilhaften Weiterbildung können die Keilflächen der Riegelkontur und die Rampen des Ablenkbereichs gleichförmig geneigt sein, derart, dass die eine Keilfläche flächig an der einen Rampe abgleiten kann, während die andere Keilfläche flächig an der anderen Rampe abgleiten kann. Durch ein derartiges flächiges Abgleiten der Riegelkontur an dem Ablenkbereich ergibt sich ein reduzierter Verschleiß für das Riegelelement bzw. für das Schaltergehäuse. Erfindungsgemäß ist das Riegelelement ringförmig ausgestaltet und koaxial zum Schließzylinder angeordnet wobei es den Schließzylinder umgreift. Hierdurch ist das Riegelelement besonders zuverlässig am Schließzylinder verstellbar gelagert. Ferner besitzt das Riegelelement hierdurch eine besonders hohe Stabilität.

Gemäß einer bevorzugten Weiterbildung kann das ringförmige Riegelelement zwei diametral gegenüberliegende Mitnehmerkonturen aufweisen, wobei am Schließzylinder dann zwei separate, einander diametral gegenüberliegende Führungsöffnungen vorgesehen sind, so dass jede Mitnehmerkontur in eine der Führungsöffnungen eingreifen und in den Einführkanal vorstehen kann. Durch die beiden Mitnehmerkonturen kann zum einen eine stabile Lagefixierung des Schlüssels am Riegelelement realisiert werden, während gleichzeitig die an der jeweiligen Mitnehmerkontur wirkenden Kräfte reduziert werden können.

Bei einer anderen Ausführungsform kann auch vorgesehen sein, dass die beiden Mitnehmerkonturen über einen quer zur Drehachse verlaufenden Steg miteinander verbunden sind, wodurch die Stabilität des Riegelelements nochmals erhöht werden kann.

Bei einer anderen Ausführungsform kann das ringförmige Riegelelement zwei diametral gegenüberliegende Riegelkonturen aufweisen, wobei an der Innenseite des Schaltergehäuses zwei diametral gegenüberliegende Riegelkulissen ausgebildet sind, so dass jede Riegelkontur mit einer der Riegelkulissen zusammenwirkt. Diese Maßnahme führt zu einer extremen Vergrößerung der Missbrauchskräfte, die erforderlich sind, um den Schließzylinder bei in die Verriegelungsstellung verstelltem Riegelelement relativ zum Schaltergehäuse zu verdrehen. Wird beispielsweise mit einem Schlitz-Schraubendreher, der anstelle eines passenden Schlüssels in die Schlüsselöffnung eingesteckt wird, ein Drehmoment in den Schließzylinder eingeleitet, führen erst über die hohen Missbrauchskräfte hinausgehende Kräfte zu einer Zerstörung des Riegelelements, wodurch im Missbrauchsfall der Schließzylinder entriegelt werden kann.

Gemäß einer anderen Weiterbildung kann das riegelförmige Riegelelement einen Ringkörper aufweisen, von dem die jeweilige Mitnehmerkontur radial nach innen absteht und von dem die jeweilige Riegelkontur im Bereich der Mitnehmerkontur radial nach außen absteht. Hierdurch ist das Riegelelement genau in dem Bereich, in dem die Krafteinleitung erfolgt, besonders stabil ausgestaltet.

Bei einer anderen Ausführungsform kann der Schließzylinder eine die Schlüsselöffnung enthaltende Stirnscheibe aufweisen, an deren Rückseite der Einführkanal angeordnet ist. Das Riegelelement kann nun in seiner Verriegelungsstellung axial an der Rückseite der Stirnscheibe anliegen. Durch diese Bauform ist das Riegelelement proximal zur Stirnscheibe angeordnet, so dass bereits bei einer sehr geringen Einführtiefe des Schlüssels eine Kontaktierung mit dem Riegelelement erfolgt. Diese Maßnahme führt zu einer verbesserten Haptik des Schlüsselschalters, da der Anwender beim Einführen des Schlüssels in die Schlüsselöffnung schon bei einer sehr geringen Einführtiefe die Kontaktierung des Schlüssels mit dem Riegelelement fühlen kann. Intuitiv wird der Anwender dann den Schlüssel gegen den fühlbaren Widerstand tiefer einführen wollen, um die Entriegelung zu bewirken. Intuitiv wird der Anwender dadurch davon abgehalten, bei unzureichend eingeführtem Schlüssel ein Verdrehen des Schließzylinders mit Gewalt zu versuchen. Des Weiteren wirkt sich die proximal zur Stirnscheibe angeordnete Verriegelungsstellung des Riegelelements in Verbindung mit dem Federelement dahingehend aus, dass ein Steckenlassen des Schlüssels im Schlüsselschalter nahezu unmöglich ist. Lässt nämlich der Anwender den Schlüssel los, nachdem er über den Schlüssel den Schließzylinder entriegelt und gegebenenfalls umgeschaltet hat, drückt das Federelement das Riegelelement wieder in seine Verriegelungsstellung zurück, wodurch gleichzeitig der Schlüssel aus dem Einführkanal ausgeschoben wird. Durch die Positionierung des Riegelelements in seiner Verriegelungsstellung unmittelbar an der Stirnscheibe ist der Schlüssel nicht mehr sicher am Schlüsselschalter gehalten, so dass er in der Regel abfällt. Eine derartige Konstruktion ist zum einen in sicherheitstechnischer Sicht von besonderem Interesse, da der Anwender auf diese Weise gezwungen ist, den Schlüsselschalter bewusst zu betätigen. Ein unbewusstes Betätigen des versehentlich noch im Schlüsselschalter steckenden Schlüssels, insbesondere durch den Beifahrer im Falle eines Schlüsselschalters zur Deaktivierung eines Beifahrerairbags, lässt sich dadurch weitgehend vermeiden. Zum anderen werden derartige Schlüsselschalter zur Deaktivierung eines Airbags vermehrt in einem Türrahmen des Fahrzeugs angeordnet, so dass sie nur bei geöffneter Fahrzeugtür zugänglich sind. Lässt der Anwender den Schlüssel versehentlich im Schlüsselschalter stecken, kann es beim Schließen der Fahrzeugtür zu einem relativ großen Schaden kommen. Zu einem versehentlichen Steckenlassen des Schlüssels im Schlüsselschalter kann es insbesondere bei modernen Kraftfahrzeugen leicht kommen, wenn der Fahrzeugschlüssel, der zur Betätigung des Schlüsselschalters vorgesehen ist, als Funkschlüssel zur Betätigung einer Fahrzeugverriegelung ausgestaltet ist und/oder wenn das Fahrzeug einen Startknopf aufweist, so dass es zum Starten des Fahrzeugs nicht erforderlich ist, den Fahrzeugschlüssel in ein zugehöriges Zündschloss einzuführen.

Besonders vorteilhaft ist eine Ausführungsform, bei welcher das Federelement zum Vorspannen des Riegelelements in dessen Verriegelungsstellung durch eine Schraubendruckfeder gebildet ist, die koaxial zur Drehachse außen am Schließzylinder angeordnet ist und die sich einenends am Riegelelement und anderenends am Schaltergehäuse oder am Schließzylinder axial abstützt. Die Abstützung kann dabei indirekt über eine Scheibe oder direkt erfolgen.

Gemäß einer anderen Ausführungsform kann ein Torsionsfederelement vorgesehen sein, mit dessen Hilfe das in die Entriegelungsstellung verstellte Riegelelement in eine bevorzugte Schaltstellung vorgespannt ist. Beispielsweise ist die erste Schaltstellung die bevorzugte Schaltstellung, so dass das Torsionsfederelement das Riegelelement in die erste Schaltstellung vorspannt, sobald es seine Entriegelungsstellung einnimmt. Das Torsionsfederelement stützt sich dabei einerseits am Riegelelement oder am Schließzylinder und andererseits am Schaltergehäuse in der Umfangsrichtung ab. Hierdurch lässt sich eine bevorzugte bzw. empfohlene Schaltstellung für den Schlüsselschalter definieren, um irrtümliche Fehlschaltungen zu vermeiden.

Besonders vorteilhaft ist dabei eine Weiterbildung, bei welcher das Federelement, das zum Vorspannen des Riegelelements in dessen Verriegelungsstellung dient, als Torsionsfeder ausgestaltet ist und somit gleichzeitig das vorgenannte Torsionsfederelement bildet. Auf diese Weise lassen sich zwei wichtige Sicherheitsfunktionen in ein und dasselbe Bauteil integrieren, nämlich in das Federelement, das somit insbesondere als Torsionsschraubendruckfeder ausgestaltet sein kann.

Bei einer anderen vorteilhaften Ausführungsform kann das Schaltergehäuse eine Zylinderöffnung aufweisen, durch die der Schließzylinder axial in das Schaltergehäuse eingeführt ist. Das Schaltergehäuse kann ferner distal zur Zylinderöffnung wenigstens eine radial nach innen vorstehende, radial federnde Raste aufweisen, die bei eingeführtem Schließzylinder in eine am Schließzylinder ausgebildete Ringnut eingreift. Hierdurch wird der Schließzylinder bei der Montage am Schaltergehäuse bei Erreichen seiner vorbestimmten Relativlage automatisch verrastet. Die Verrastung zwischen der jeweiligen Raste und der Ringnut bildet dabei eine axial wirkende Auszugssicherung, die den Schließzylinder am Schaltergehäuse in der Axialrichtung fixiert.

Die zuvor genannte Stirnscheibe des Schließzylinders kann die vorstehend genannte Zylinderöffnung des Schaltergehäuses verschließen. Insbesondere kann die Stirnplatte dabei bündig mit einer stirnseitigen Außenfläche des Schaltergehäuses abschließen, in der die Zylinderöffnung ausgebildet ist, oder in der Außenfläche vertieft bzw. versenkt angeordnet sein.

Der hier vorgestellte Schlüsselschalter kann zweckmäßig außerdem mit einer elektrischen Schalteinrichtung ausgestattet sein, die auf geeignete Weise mit dem Schließzylinder gekoppelt ist, um die Schalteinrichtung zwischen zwei Schaltzuständen umschalten zu können, die den beiden Schaltstellungen des Schließzylinders zugeordnet sind. Zweckmäßig besitzt diese Schalteinrichtung dabei ein eigenes Einrichtungsgehäuse, in dem sämtliche elektrischen Komponenten der Schalteinrichtung untergebracht sind und die zur Realisierung einer mechanischen Schnittstelle ein Betätigungselement zum Betätigen bzw. zum Schalten eines elektrischen Schalters der Schalteinrichtung aufweist. Der Schließzylinder ist, insbesondere an seinem von der Schlüsselöffnung abgewandten stirnseitigen Ende mit einem zum Betätigungselement des elektrischen Schalters der Schalteinrichtung komplementären Antriebselement ausgestattet, das beim Verdrehen des Schließzylinders mit dem Betätigungselement zusammenwirkt, um den zugehörigen elektrischen Schalter zu schalten bzw. zu betätigen, was zum Einstellen eines der beiden Schaltzustände der Schalteinrichtung führt. Das Einrichtungsgehäuse und das Schaltergehäuse können zweckmäßig so aufeinander abgestimmt sein, dass sie aneinander steckbar und miteinander verrastbar sind, wodurch für den Schlüsselschalter eine Einheit gebildet wird, die sich besonders einfach montieren lässt, nämlich insbesondere ohne die Verwendung zusätzlicher, separater Befestigungselemente.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1: eine isometrische Ansicht eines Schlüsselschalters,
- Fig. 2: eine geschnittene Teilansicht des Schlüsselschalters,
- Fig. 3: eine isometrische Innenansicht eines Schaltergehäuses,
- Fig. 4: eine Seitenansicht eines Schließzylinders,
- Fig. 5: eine isometrische Ansicht eines Riegelelements,
- Fig. 6: eine isometrische Ansicht des Riegelelements, jedoch bei einer anderen Ausführungsform,
- Fig. 7: eine Schnittansicht des Schließzylinders mit einem eingeführten Schlüssel,
- Fig. 8: eine Schnittansicht des Riegelelements mit eingeführtem Schlüssel, jedoch bei einem anderen Anwendungsfall,
- Fig. 9: eine Teil-Draufsicht auf den Schlüsselschalter bei fehlendem Schließzylinder und transparentem Riegelelement, bei einer anderen Ausführungsform,
- Fig. 10: eine Schnittansicht des Schlüsselschalters aus Fig. 9 bei fehlendem Schließzylinder und fehlendem Riegelelement.

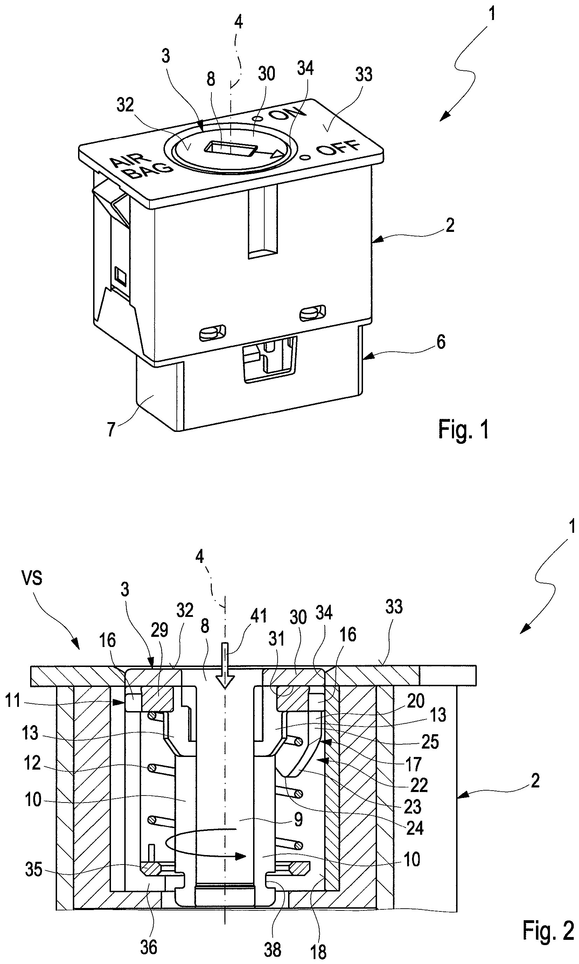

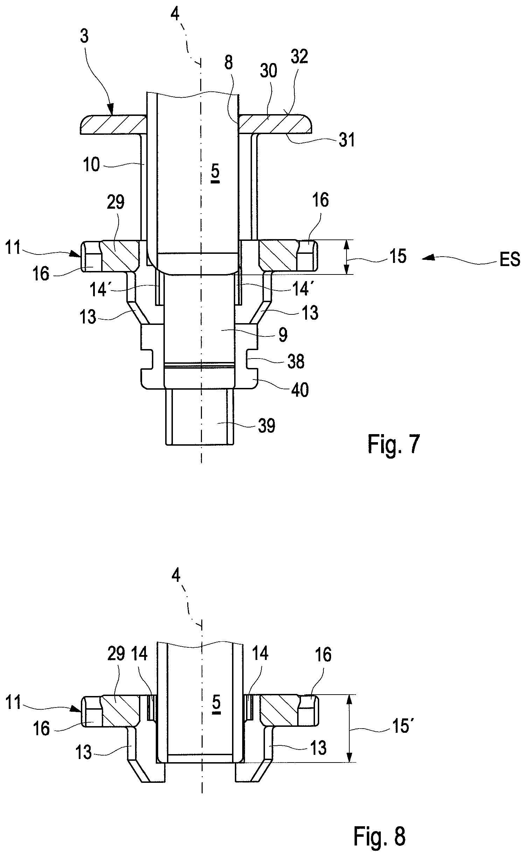

Entsprechend den Figuren 1 bis 4 umfasst ein Schlüsselschalter 1 ein Schaltergehäuse 2, in dem ein Schließzylinder 3 um eine Drehachse 4 drehbar angeordnet ist. Der Schlüsselschalter 1 ist mit Hilfe eines in den Figuren 7 und 8 zumindest teilweise dargestellten Schlüssels 5 betätigbar, also schaltbar und ist für sicherheitsrelevante Anwendungen vorgesehen. Der in Fig. 1 wiedergegebene Schlüsselschalter 1 ist aufgrund seines Aufdrucks zum Deaktivieren eines Airbags vorgesehen.

In Fig. 1 ist außerdem eine elektrische Schalteinrichtung 6 des Schlüsselschalters 1 erkennbar, deren Einrichtungsgehäuse 7 an das Schaltergehäuse 2 angebaut ist. Bevorzugt wird hierbei eine selbsttätig verrastende Steckverbindung. Die Schalteinrichtung 6 enthält einen hier nicht näher dargestellten elektrischen Schalter, mit dessen Hilfe die Schalteinrichtung 6 zwischen zwei verschiedenen Schaltzuständen umschaltbar ist. Beispielsweise handelt es sich um die Schaltzustände "AIRBAG ON" und "AIRBAG OFF".

Entsprechend den Fig. 1 bis 10 umfasst der Schließzylinder 3 eine axiale Schlüsselöffnung 8, die zum axialen Einführen des Schlüssels 5 dient. Außerdem ist der Schließzylinder 3 mit einem zur Schlüsselöffnung 8 offenen Einführkanal 9 ausgestattet, in den der Schlüssel 5 eingeführt wird, wenn er durch die Schlüsselöffnung 8 hindurchgeführt ist. Außerdem ist der Schließzylinder 3 mit wenigstens einer zum Einführkanal 9 offenen radialen Führungsöffnung 10 ausgestattet. Im hier gezeigten Beispiel sind zwei derartige Führungsöffnungen 10 vorgesehen, die einander diametral gegenüberliegend angeordnet sind.

Die Angaben "axial", "radial" und "diametral" beziehen sich auf eine Längsachse bzw. Axialrichtung, die durch die Drehachse 4 definiert ist. Somit erstreckt sich "axial" parallel zur Drehachse 4, während "radial" quer zur Drehachse 4 verläuft.

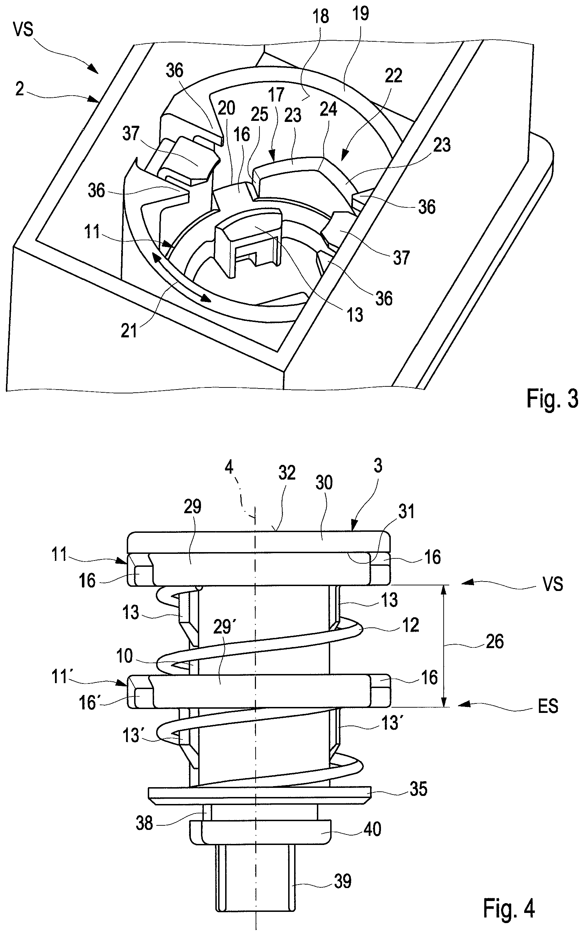

Im Schaltergehäuse 2 ist ein Riegelelement 11 angeordnet, das mit Hilfe des Schlüssels 5 von einer in den Fig. 2 bis 4 und 9 angedeuteten Verriegelungsstellung VS in eine in den Fig. 4 und 7 angedeutete Entriegelungsstellung ES überführbar ist. Das Riegelelement 11 ist außerdem mit Hilfe eines Federelements 12 in die Verriegelungsstellung VS angetrieben. Der Schließzylinder 3 ist mit Hilfe des Schlüssels 5 zwischen einer ersten Schaltstellung (zum Beispiels OFF gemäß Fig. 1) und einer zweiten Schaltstellung (zum Beispiel ON gemäß Fig. 1) um die Drehachse 4 drehend verstellbar, wenn das Riegelelement 11 in seine Entriegelungsstellung ES verstellt ist. Ist dagegen das Verriegelungselement 11 in seine Verriegelungsstellung VS verstellt, ist der Schließzylinder 3 mit Hilfe des Riegelelements 11 gegen ein Verdrehen relativ zum Schaltergehäuse 2 gesichert. Beim hier vorgestellten Schlüsselschalter 1 ist das Riegelelement 11 relativ zum Schaltergehäuse 2 und relativ zum Schließzylinder 3 axial hubverstellbar angeordnet, um es zwischen der Entriegelungsstellung ES und der Verriegelungsstellung VS verstellen zu können. Des Weiteren ist hier vorgesehen, dass das Riegelelement 11 sowohl in seiner Verriegelungsstellung VS als auch in seiner Entriegelungsstellung ES bezüglich der Drehachse 4 drehfest mit dem Schließzylinder 3 gekoppelt ist. In der Folge wird das Riegelelement 11 beim Verdrehen des Schließzylinders 3, also beim Schalten des Schließzylinders 3 gemeinsam mit dem Schließzylinder 3 mitverdreht. Ferner ist das Riegelelement 11 in der Entriegelungsstellung ES relativ zum Schaltergehäuse 2 um die Drehachse 4 verdrehbar, während es in der Verriegelungsstellung VS relativ zum Schaltergehäuse 2 bezüglich der Drehachse 4 drehfest angeordnet ist. Da in der Verriegelungsstellung VS somit das Riegelelement 11 einerseits drehfest zum Schaltergehäuse 2 und andererseits drehfest zum Schließzylinder 3 angeordnet ist, sind über das Riegelelement 11 auch der Schließzylinder 3 und das Schaltergehäuse 2 relativ zueinander drehfest angeordnet.

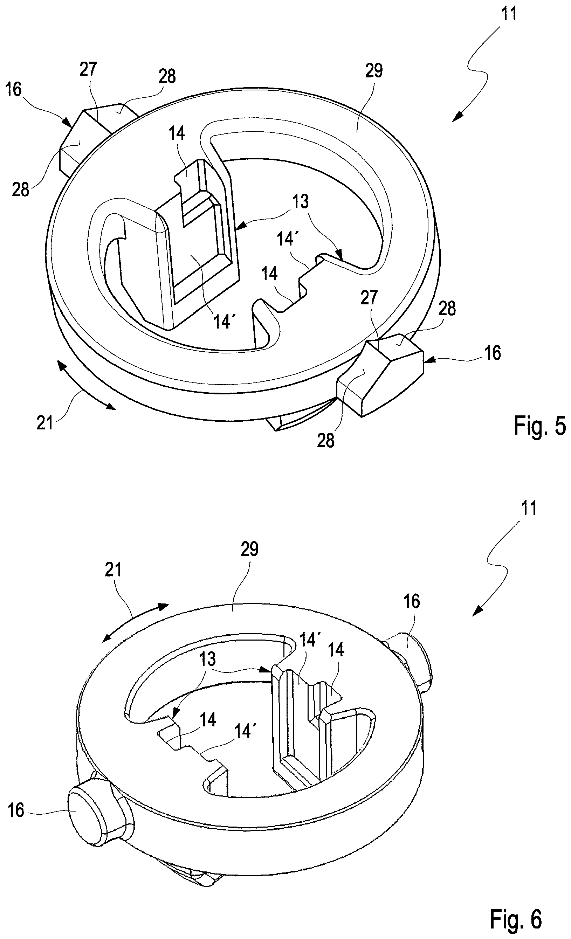

Wie sich insbesondere den Fig. 5 bis 8 entnehmen lässt, weist das Riegelelement 11 zumindest eine Mitnehmerkontur 13 auf. Bei den hier gezeigten Beispielen sind jeweils zwei Mitnehmerkonturen 13 vorgesehen, die einander diametral gegenüberliegend am Riegelelement 11 ausgebildet sind. Die jeweilige Mitnehmerkontur 13 greift durch die jeweilige Führungsöffnung 10 hindurch in den Einführkanal 9 hinein, so dass die jeweilige Mitnehmerkontur 13 in den Einführkanal 9 vorsteht. Die Führungsöffnungen 10 sind dabei als Längsführungen bzw. Axialführungen für die jeweilige Mitnehmerkontur 13 ausgestaltet. In der Folge ist das Riegelelement 11 über die Mitnehmerkonturen 13 in den Führungsöffnungen 10 am Schließzylinder 3 parallel zur Drehachse 4 hubverstellbar geführt. Des Weiteren ist das Riegelelement 11 durch die in die Führungsöffnungen 10 eingreifenden Mitnehmerkonturen 13 gegen ein Verdrehen um die Drehachse 4 gesichert. Bei den hier gezeigten Beispielen erstrecken sich die Führungsöffnungen 10 jeweils ausgehend von der Schlüsselöffnung 8 über die gesamte übrige axial orientierte Höhe des Schließzylinders 3.

Gemäß den Fig. 5 bis 8 sind die hier gezeigten Mitnehmerkonturen 13 so gestaltet, dass sie jeweils zwei verschiedene Mitnehmergeometrien 14 und 14' aufweisen. Diese unterschiedlichen Mitnehmergeometrien 14, 14' sind an verschiedene Schlüssel 5 gemäß Fig. 7 bzw. 5' gemäß Fig. 8 angepasst. Des Weiteren sind die unterschiedlichen Mitnehmergeometrien 14, 14' so geformt, dass sie für den jeweils zugehörigen Schlüssel 5, 5' verschiedene Einführtiefen 15 bzw. 15' definieren. Die Einführtiefe 15, 15' entspricht dem Weg, den der Schlüssel 5, 5' in das Riegelelement 11 eingeführt werden muss, bis das Riegelelement 11 über die jeweilige Mitnehmergeometrie 14, 14' beim weitergehenden Einführen des Schlüssels 5 in den Einführkanal 9 mitgenommen wird. Erkennbar erzeugt die erste Mitnehmergeometrie 14 eine deutlich kleinere Einführtiefe 15 als die zweite Mitnehmergeometrie 14', deren Einführtiefe 15' etwa doppelt so groß ist wie die der ersten Mitnehmergeometrie 14. Durch die unterschiedlichen Mitnehmergeometrien 14 und 14' kann insbesondere in Verbindung mit den unterschiedlichen Einführtiefen 15, 15' für den jeweiligen Schlüssel 5 bzw. 5' eine relativ stabile Positionierung des Schlüssels 5, 5' am Riegelelement 11 erzeugt werden, so dass Relativbewegungen zwischen Schlüssel 5, 5' und Riegelelement 11 beim weitergehenden Einführen des Schlüssels 5, 5' und somit beim Hubverstellen des Riegelelements 11 reduziert bzw. vermieden werden. Die Schlüsselöffnung 8 ist an die unterschiedlichen Mitnehmergeometrien 14, 14' so angepasst, dass die unterschiedlichen Schlüssel 5, 5' jeweils durch die Schlüsselöffnung 8 einführbar sind.

Wie sich insbesondere den Fig. 5 und 6 entnehmen lässt, besitzt das Riegelelement 11 zumindest eine Riegelkontur 16, die radial nach außen vom Riegelelement 11 absteht. Bei den hier gezeigten Beispielen ist das Riegelelement 11 jeweils mit zwei diametral gegenüberliegend angeordneten Riegelkonturen 16 ausgestattet. Gemäß den Fig. 2 und 3 greift die jeweilige Riegelkontur 16 radial in eine Riegelkulisse 17 ein, die an einer dem Schließzylinder 3 zugewandten Innenseite 18 des Schaltergehäuses 2 ausgebildet ist. Im Beispiel besitzt das Schaltergehäuse 2 gemäß Fig. 3 in seinem Inneren eine zylindrische Hülse 19, die den Schließzylinder 3 koaxial umschließt. Im Beispiel sind zwei einander diametral gegenüberliegende Riegelkulissen 17 vorgesehen, von denen in den Fig. 2 und 3 jeweils nur eine erkennbar ist. Die jeweilige Riegelkulisse 17 weist zwei Eingriffsbereiche 20 auf, die in der in Fig. 3 durch einen Doppelpfeil angedeuteten Umfangsrichtung 21 voneinander beabstandet sind. Die Eingriffsbereiche 20 sind dabei den beiden Schaltstellungen des Schließzylinders 3 zugeordnet. Die jeweilige Riegelkontur 16 greift in der Verriegelungsstellung VS in der einen Schaltstellung (zum Beispiel OFF) in den einen Eingriffsbereich 20 ein, während sie in der anderen Schaltstellung (zum Beispiel ON) in den anderen Eingriffsbereich 20 eingreift. Dabei ist das Riegelelement 11 durch die jeweilige in den jeweiligen Eingriffsbereich 20 eingreifende Riegelkontur 16 gegen ein Verdrehen relativ zum Schaltergehäuse 2 gesichert.

Bei den hier gezeigten bevorzugten Ausführungsformen weist die jeweilige Riegelkulisse 17 in der Umfangsrichtung 21 zwischen den beiden Eingriffsbereichen 20 einen Ablenkbereich 22 auf, der gegenüber den Eingriffsbereichen 20 axial versetzt ist. Entlang des Ablenkbereichs 22 lässt sich die jeweilige Riegelkontur 16 in den einen oder anderen Eingriffsbereich 20 überführen. Insoweit definiert der Ablenkbereich 22 die Entriegelungsstellung ES des Riegelelements 11.

Der Ablenkbereich 22 kann sich beispielsweise in einer Ebene erstrecken, die senkrecht zur Axialrichtung bzw. Drehachse 4 verläuft. Bevorzugt ist der Ablenkbereich 22 jedoch im Wesentlichen keilförmig ausgestaltet.

Dieser Ablenkbereich 22 kann gemäß der in den Figuren 2 und 3 gezeigten Ausführungsform zwei gegenläufige Rampen 23 besitzen, die von einer gemeinsamen Kante 24 ausgehen und sich dann in der Umfangsrichtung 21 sowie axial erstrecken. Die Rampen 23 sind so auf die zugeordnete Riegelkontur 16 abgestimmt, dass die Riegelkontur 16 an den Rampen 23 abgleiten kann. Dabei führt die jeweilige Rampe 23 die daran abgleitende Riegelkontur 16 dem jeweiligen Eingriffsbereich 20 zu. Das bedeutet, dass die eine Rampe 23 die Riegelkontur 16 dem einen Eingriffsbereich 20 zuführt, z.B. im Uhrzeigersinn, während die andere Rampe 23 die Riegelkontur 16 dem anderen Eingriffsbereich 20 zuführt, z.B. im Gegenuhrzeigersinn.

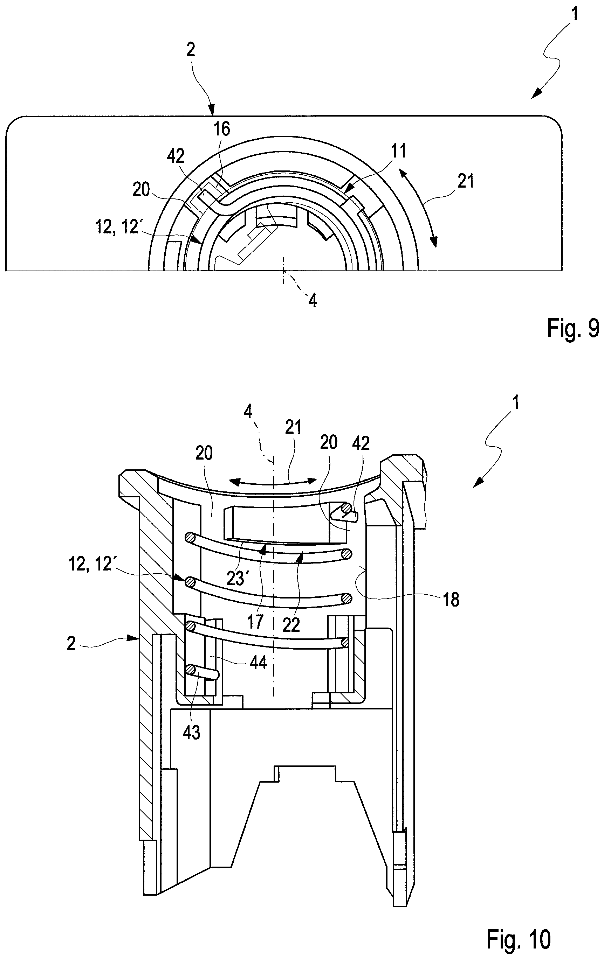

Alternativ kann der Ablenkbereich 22 gemäß einer in den Figuren 9 und 10 erkennbaren Ausführungsform so gestaltet sein, dass er nur eine Rampe 23' besitzt, die sich in der Umfangsrichtung erstreckt. Diese Rampe 23' beginnt an dem einen Eingriffsbereich 20 und endet an dem anderen Eingriffsbereich 20. Auch diese eine Rampe 23' ist so gestaltet, dass die jeweilige Riegelkontur 16 daran abgleiten kann, wobei sie über die Rampe 23' dem jeweiligen Eingriffsbereich 20 zugeführt wird.

Des Weiteren lässt sich den Fig. 2, 3 und 9, 10 entnehmen, dass der jeweilige Eingriffsbereich 20 über einen axial verlaufenden Führungsbereich 25 in den Ablenkbereich 22 übergeht. Die an der jeweiligen Rampe 23 bzw. 23' abgleitende Riegelkontur 16 wird mit Hilfe des jeweiligen Führungsbereichs 25 dann axial in den jeweiligen Eingriffsbereich 20 überführt. Die sich axial erstreckenden Führungsbereiche 25 definieren somit einen in Fig. 4 angedeuteten Mindesthub 26, den das Riegelelement 11 relativ zum Schließzylinder 3 verstellt werden muss, um von der Verriegelungsstellung VS in die Entriegelungsstellung ES zu gelangen. In der Entriegelungsstellung ES kann das Riegelelement 11 relativ zum Schaltergehäuse 2 um die Drehachse 4 gedreht werden, ohne dass es dabei zu einer Kollision zwischen den Riegelkonturen 16 und den Ablenkbereichen 22 kommt. Bei der in den Figuren 9 und 10 gezeigten Ausführungsform ist dabei der besagte Mindesthub 26 in der einen Schaltstellung größer als in der anderen Schaltstellung.

Die jeweilige Riegelkulisse 17 definiert im Zusammenspiel mit der jeweiligen Riegelkontur 16 außerdem zwei Endanschläge für die Drehverstellung des Schließzylinders 3 relativ zum Schaltergehäuse 2, die den beiden Schaltstellungen des Schließzylinders 3 zugeordnet sind.

Gemäß der in Fig. 5 gezeigten Ausführungsform, die auch in den Fig. 1 bis 4, 7 und 8 erkennbar ist, können die Riegelkonturen 16 jeweils keilförmig ausgestaltet sein, so dass sie jeweils eine Keilkante 27 sowie zwei davon ausgehende Keilflächen 28 aufweisen. Im eingebauten Zustand ist die Keilkante 27 der Schlüsselöffnung 8 zugewandt. Im Unterschied dazu ist die Kante 24 des jeweiligen Ablenkbereichs 22 von der Schlüsselöffnung 8 abgewandt. Somit sind in der Entriegelungsstellung ES die Keilkanten 27 den Kanten 24 zugewandt. Wenn nun der Schlüssel 5 abgezogen wird, bevor der Schließzylinder 3 ordnungsgemäß die jeweilige Schaltstellung erreicht hat, sind die Riegelkonturen 16 nicht axial fluchtend zu den Führungsbereichen 25 ausgerichtet. In der Folge kommen die Riegelkonturen 16 jeweils mit einer ihrer Keilflächen 28 an einer der Rampen 23 zur Anlage, wodurch die Riegelkonturen 16 an den Rampen 23 bis zu den Führungsbereichen 25 abgleiten können. In den Führungsbereichen 25 wird dann die jeweilige Riegelkontur 16 in den zugehörigen Eingriffsbereich 20 überführt. Zur Reduzierung eines Verschleißes können die Keilflächen 28 gleichförmig zu den Rampen 23 geneigt sein, so dass die Keilflächen 28 flächig an der zugehörigen Rampe 23 abgleiten können. Das Abgleiten der Keilflächen 28 an den Rampen 23 erzeugt eine Drehbewegung des Schließzylinders 3 im Schaltergehäuse 2, wodurch die jeweils nähere Schaltstellung automatisch erreicht wird.

Fig. 6 zeigt eine alternative Ausführungsform, bei welcher die Riegelkonturen 16 als zylindrische Zapfen konfiguriert sind. Hierdurch kommt es an den Rampen 23 jeweils zu einem linienförmigen Kontakt.

Wie sich den hier gezeigten Beispielen der Fig. 2 bis 9 entnehmen lässt, ist das Riegelelement 11 bevorzugt ringförmig ausgestaltet, wobei es koaxial zum Schließzylinder 3 so angeordnet ist, dass es den Schließzylinder 3 umgreift. Dementsprechend besitzt das Riegelelement 11 einen Ringkörper 29, der in der Umfangsrichtung 21 geschlossen ist. Von diesem Ringkörper 29 stehen die Mitnehmerkonturen 13 radial nach innen ab, während die Riegelkonturen 16 vom Ringkörper 29 radial nach außen abstehen. Zweckmäßig sind dabei die Riegelkonturen 16 jeweils im Bereich einer solchen Mitnehmerkontur 13 angeordnet. Im Bereich der Mitnehmerkonturen 13 bzw. der Riegelkonturen 16 ist das Riegelelement 11 dadurch besonders stabil ausgestaltet.

Wie sich insbesondere den Fig. 1, 2, 4 und 7 entnehmen lässt, ist der Schließzylinder 3 zweckmäßig mit einer Stirnscheibe 30 ausgestattet, an deren Rückseite 31 der Einführkanal 29 angeordnet ist. Zweckmäßig kann nun das Riegelelement 11 in seiner Verriegelungsstellung VS axial an der Rückseite 31 der Stirnscheibe 30 anliegen. Hierdurch ist nur eine sehr geringe Einstecktiefe für den jeweiligen Schlüssel 5 erforderlich, um das Riegelelement 11 zu kontaktieren bzw. um mit der jeweiligen Mitnehmerkontur 13 zusammenzuwirken. Die Stirnscheibe 30 besitzt außerdem eine vom Einführkanal 9 abgewandte Außenseite 32, die mit einer Außenfläche 33 des Schaltergehäuses 2 im Wesentlichen bündig abschließt bzw. darin versenkt angeordnet ist. Beispielsweise besitzt das Schaltergehäuse 2 an seiner Außenseite 33 eine Zylinderöffnung 34, durch welche der Schließzylinder 3 axial in das Schaltergehäuse 2 eingesetzt ist. Die Stirnscheibe 30 verschließt diese Zylinderöffnung 34.

Das in den Fig. 2, 4, 9 und 10 erkennbare Federelement 12 ist hier entsprechend einer bevorzugten Ausführungsform durch eine Schraubendruckfeder gebildet, die sich koaxial zur Drehachse 4 erstreckt und dabei außen am Schließzylinder 3 angeordnet ist. Das schraubenförmige Federelement 12 ist einenends am Riegelelement 11 und anderenends am Schaltergehäuse 2 abgestützt. Die Abstützung am Schaltergehäuse 2 erfolgt im Beispiel indirekt, nämlich über eine Scheibe 35. Hierzu weist das Schaltergehäuse 2 radial nach innen vorstehende Scheibenauflagen 36 auf, die radial nach innen vorstehen und die Ringscheibe 35 an einer von der Zylinderöffnung 34 abgewandten Seite hintergreifen.

Bei der in den Figuren 9 und 10 gezeigten Ausführungsform bildet das Federelement 12 gleichzeitig ein Torsionsfederelement 12' bzw. ist als solches ausgestaltet. Insbesondere handelt es sich hier um eine Torsionsschraubendruckfeder. Das Torsionsfederelement 12' kann das in die Entriegelungsstellung ES verstellte Riegelelement 11 in eine bevorzugte Schaltstellung (ON oder OFF) vorspannen. Beispielsweise ist die erste Schaltstellung (AIRBAG ON) die bevorzugte Schaltstellung, so dass das Torsionsfederelement 12' das Riegelelement 11 in die erste Schaltstellung antreibt, sobald es seine Entriegelungsstellung ES einnimmt. Das Torsionsfederelement 12' stützt sich dabei einerseits mit einem ersten, nach außen abgewinkelten Ende 42 am Riegelelement 11 und andererseits mit einem zweiten, nach außen abgewinkelten Ende 43 am Schaltergehäuse 2 in der Umfangsrichtung 21 ab. Beispielsweise greift das erste Ende 42 innerhalb des hohl ausgestalteten Riegelelements 11 von innen in die eine Riegelkontur 16 ein, während das zweite Ende 43 in einen an der Innenseite 18 ausgebildeten Aufnahmeschlitz 44 ein.

Bei der hier gezeigten Ausführungsform dient das Torsionsfederelement 12' einerseits zum axialen Vorspannen des Riegelelements 11 in dessen Verriegelungsstellung VS und andererseits zum Antreiben des Riegelelements 11 in der Umfangsrichtung 21 in dessen Entriegelungsstellung ES.

Das Schaltergehäuse 2 weist außerdem distal zur Zylinderöffnung 34 zumindest eine Raste 37 auf. Im Beispiel der Fig. 3 sind zwei derartige Rasten 37 erkennbar, die einander diametral gegenüberliegen. Die jeweilige Raste 37 steht dabei radial nach innen vor und ist radial federnd ausgestaltet. Sobald der Schließzylinder 3 beim Einstecken in die Zylinderöffnung 34 seine vorgesehene Relativlage im Schaltergehäuse 2 erreicht, rasten die Rasten 37 in eine Ringnut 38 ein, die am Schließzylinder 3 in der Umfangsrichtung 21 vollständig umlaufend ausgestaltet ist.

In den Fig. 4 und 7 ist ein Antriebselement 39 erkennbar, das an einem von der Schlüsselöffnung 8 bzw. von der Stirnscheibe 30 entfernten Ende 40 des Schließzylinders 3 exzentrisch angeordnet ist und von diesem distalen Ende 40 axial absteht. Dieses Antriebselement 39 koppelt den Schließzylinder 3 mit der elektrischen Schalteinrichtung 6 bzw. mit dem zuvor genannten elektrischen Schalter der Schalteinrichtung 6. Besagter elektrischer Schalter kann zu seiner Betätigung ein entsprechendes Betätigungselement besitzen, das mit Hilfe des Antriebselements 39 betätigt, also zwischen zwei Schaltstellungen verstellt werden kann.

Der hier vorgestellte Schlüsselschalter 1 funktioniert wir folgt. Ausgehend von der in Fig. 1 gezeigten Ausgangsstellung, in welcher der Schließzylinder 3 seine zweite Schaltstellung, hier "OFF" einnimmt, soll der Schlüsselschalter 1 zum Aktivieren des Airbags betätigt werden. Hierzu muss ein dazu geeigneter Schlüssel 5 verwendet werden. Der Schlüssel 5 wird durch die Schlüsselöffnung 8 in den Einführkanal 9 gemäß einem in Fig. 2 angedeuteten Pfeil 41 eingeführt. Sobald der Schlüssel 5 mit seinem vorausgehenden Ende über die Mitnehmerkonturen 13 mit dem Riegelelement 11 in Eingriff steht, kann durch Fortsetzen der Einsteckbewegung 41 das Riegelelement 11 relativ zum Schaltergehäuse 2 und relativ zum Schließzylinder 2 hubverstellt werden, um es von der Verriegelungsstellung VS in die Entriegelungsstellung ES zu überführen. Sobald die Entriegelungsstellung ES erreicht ist, ist der Schließzylinder 3 entriegelt und kann mit Hilfe des Schlüssels 5 um die Drehachse 4 verdreht werden. Somit lässt sich der Schließzylinder in die erste Schaltstellung, hier "ON" überführen. Anschließend kann der Schlüssel 5 abgezogen werden. Beim Abziehen des Schlüssels 5 folgt das Riegelelement 11 der Abzugsbewegung, da es mit Hilfe des Federelements 12 in seine Verriegelungsstellung VS angetrieben ist.

Wird dagegen der Schlüssel 5 nach dem Umschalten nicht abgezogen, sondern lediglich losgelassen, treibt das hierzu hinreichend stark ausgestaltete Federelement 12 das Riegelelement 11 mitsamt dem Schlüssel 5 in die Verriegelungsstellung VS an. Hierbei wird der Schlüssel 5 aus dem Einführkanal 9 ausgetrieben. Bei Erreichen der Verriegelungsstellung VS kann der Schlüssel 5 vorzugsweise vom Schlüsselschalter 1 abfallen.

Wird der Schließzylinder 3 nicht ordnungsgemäß in eine seiner Schaltstellungen überführt und dennoch abgezogen oder losgelassen, treibt das Federelement 12 wieder das Riegelelement 11 in Richtung Verriegelungsstellung VS an. Hierbei trifft jedoch die jeweilige Riegelkontur 16 auf die jeweilige Rampe 23 bzw. 23', wodurch eine Drehbewegung in den Schließzylinder 3 eingeleitet wird bis der Schließzylinder 3 eine seiner beiden Schaltstellungen erreicht und die Riegelkonturen 16 in die zugehörigen Eingriffsbereiche 20 eingreifen können. Ist ein vorstehend beschriebenes Torsionsfederelement 12' vorgesehen, treibt es das Riegelelement 11 und somit den Schließzylinder 3 in die bevorzugte Schaltstellung, z.B. die erste Schaltstellung, an.

## Patentansprüche

1. Schlüsselschalter für sicherheitsrelevante Anwendungen, insbesondere zur Deaktivierung eines Airbags,
- mit einem Schaltergehäuse (2),
- mit einem Schließzylinder (3), der im Schaltergehäuse (2) um eine Drehachse (4) drehbar angeordnet ist, eine axiale Schlüsselöffnung (8) zum axialen Einführen eines Schlüssels (5) und einen zur Schlüsselöffnung (8) offenen Einführkanal (9) aufweist,
- mit einem im Schaltergehäuse (2) angeordneten Riegelelement (11), das mittels des Schlüssels (5) von einer Verriegelungsstellung (VS) in eine Entriegelungsstellung (ES) überführbar ist und das mittels wenigstens eines Federelements (12) in die Verriegelungsstellung (VS) angetrieben ist,
- wobei der Schließzylinder (3) bei in die Entriegelungsstellung (ES) verstelltem Riegelelement (11) mittels des Schlüssels (5) zwischen einer ersten Schaltstellung und einer zweiten Schaltstellung drehend verstellbar ist,
- wobei der Schließzylinder (3) durch das in die Verriegelungsstellung (VS) verstellte Riegelelement (11) gegen Verdrehen relativ zum Schaltergehäuse (2) gesichert ist,
- wobei das Riegelelement (11) zum Verstellen zwischen der Verriegelungsstellung (VS) und der Entriegelungsstellung (ES) relativ zum Schaltergehäuse (2) und relativ zum Schließzylinder (3) axial hubverstellbar angeordnet ist,
- wobei der Schließzylinder (3) zumindest eine zum Einführkanal (9) offene radiale Führungsöffnung (10) aufweist,
- wobei das Riegelelement (11) wenigstens eine Mitnehmerkontur (13) aufweist, die radial durch die jeweilige Führungsöffnung (10) in den Einführkanal (9) vorsteht,
- wobei das Riegelelement (11) über die jeweilige Mitnehmerkontur (13) in der jeweiligen Führungsöffnung (10) am Schließzylinder (3) parallel zur Drehachse (4) hubverstellbar geführt und gegen Verdrehen um die Drehachse (4) gesichert ist,
**dadurch gekennzeichnet,**
**dass** das Riegelelement (11) ringförmig ausgestaltet ist und koaxial zum Schließzylinder (3) angeordnet ist und den Schließzylinder (3) umgreift.

2. Schlüsselschalter nach Anspruch 1,
**dadurch gekennzeichnet,**
**dass** die jeweilige Mitnehmerkontur (13) wenigstens zwei verschiedene Mitnehmergeometrien (14, 14') aufweist, die an verschiedene Schlüssel (5, 5') angepasst sind und die verschiedene Einführtiefen (15, 15') für die jeweiligen Schlüssel (5, 5') definieren, die der jeweilige Schlüssel (5, 5') in das Riegelelement (11) eingeführt werden muss, bis über die jeweilige Mitnehmergeometrie (14, 14') das Riegelelement (11) bei weitergehendem Einführen des Schlüssels (5, 5') mitgenommen wird.

3. Schlüsselschalter nach einem der vorhergehenden Ansprüche,
**dadurch gekennzeichnet,**
- **dass** das Riegelelement (11) wenigstens eine Riegelkontur (16) aufweist, die radial in eine Riegelkulisse (17) eingreift, die an einer dem Schließzylinder (3) zugewandten Innenseite (18) des Schaltergehäuses (2) ausgebildet ist,
- **dass** die jeweilige Riegelkulisse (17) zwei in der Umfangsrichtung (21) voneinander beabstandete, den beiden Schaltstellungen zugeordnete Eingriffsbereiche (20) aufweist,
- **dass** die jeweilige Riegelkontur (16) in der Verriegelungsstellung (VS) in der einen Schaltstellung in den einen Eingriffsbereich (20) und in der anderen Schaltstellung in den anderen Eingriffsbereich (20) eingreift und darin gegen Verdrehen relativ zum Schaltergehäuse (2) um die Drehachse (4) gesichert ist.

4. Schlüsselschalter nach Anspruch 3,
**dadurch gekennzeichnet,**
**dass** die jeweilige Riegelkulisse (17) in der Umfangsrichtung (21) zwischen den beiden Eingriffsbereichen (20) einen zu den Eingriffsbereichen (20) axial versetzten Ablenkbereich (22) aufweist, der die daran abgleitende Riegelkontur (16) je nach Drehrichtung dem einen oder dem anderen Eingriffsbereich (20) zuführt.

5. Schlüsselschalter nach Anspruch 4,
**dadurch gekennzeichnet,**
**dass** der jeweilige Ablenkbereich (22) entweder zwei gegenläufige Rampen (23) besitzt, die sich ausgehend von einer gemeinsamen Kante (24) in der Umfangsrichtung (21) und axial erstrecken, oder nur eine Rampe (23') besitzt, die sich in der Umfangsrichtung (21) erstreckt, an dem einen Eingriffsbereich (20) beginnt und an dem anderen Eingriffsbereich (20) endet, wobei die jeweilige Rampe (23; 23') die daran abgleitende Riegelkontur (16) dem jeweiligen Eingriffsbereich (20) zuführt.

6. Schlüsselschalter nach Anspruch 4 oder 5,
**dadurch gekennzeichnet,**
**dass** der jeweilige Eingriffsbereich (20) über einen axial verlaufenden Führungsbereich (25) in den Ablenkbereich (22) übergeht, der insbesondere die an der jeweiligen Rampe (23) abgleitende Riegelkontur (16) axial in den jeweiligen Eingriffsbereich (20) überführt.

7. Schlüsselschalter nach einem der vorhergehenden Ansprüche,
**dadurch gekennzeichnet,**
- **dass** das ringförmige Riegelelement (11) zwei diametral gegenüberliegende Mitnehmerkonturen (13) aufweist,
- **dass** am Schließzylinder (3) zwei separate, einander diametral gegenüberliegende Führungsöffnungen (10) vorgesehen sind,
- **dass** jede Mitnehmerkontur (13) in eine der Führungsöffnungen (10) eingreift und in den Einführkanal (9) vorsteht.

8. Schlüsselschalter nach einem der vorhergehenden Ansprüche,
**dadurch gekennzeichnet,**
- **dass** das ringförmige Riegelelement (11) zwei diametral gegenüberliegende Riegelkonturen (16) aufweist,
- **dass** an der Innenseite (18) des Schaltergehäuses (2) zwei diametral gegenüberliegende Riegelkulissen (17) ausgebildet sind,
- **dass** jede Riegelkontur (16) mit einer der Riegelkulissen (17) zusammenwirkt.

9. Schlüsselschalter nach einem der vorhergehenden Ansprüche,
**dadurch gekennzeichnet,**
**dass** das ringförmige Riegelelement (11) einen Ringkörper (29) aufweist, von dem die jeweilige Mitnehmerkontur (13) radial nach innen absteht und von dem die jeweilige Riegelkontur (16) im Bereich der Mitnehmerkontur (13) radial nach außen absteht.

10. Schlüsselschalter nach einem der Ansprüche 1 bis 9,
**dadurch gekennzeichnet,**
**dass** der Schließzylinder (3) eine die Schlüsselöffnung (8) enthaltende Stirnscheibe (30) aufweist, an deren Rückseite (31) der Einführkanal (9) angeordnet ist, wobei das Riegelelement (11) in seiner Verriegelungsstellung (VS) axial an der Rückseite (31) der Stirnscheibe (30) anliegt.

11. Schlüsselschalter nach einem der vorhergehenden Ansprüche,
**dadurch gekennzeichnet,**
**dass** das Federelement (12) zum Vorspannen des Riegelelements (11) in dessen Verriegelungsstellung (VS) als Schraubendruckfeder ausgestaltet ist, die koaxial zur Drehachse (4) außen am Schließzylinder (3) angeordnet ist und die sich einenends am Riegelelement (11) und anderenends am Schaltergehäuse (2) oder am Schließzylinder (3) axial abstützt.

12. Schlüsselschalter nach einem der Ansprüche 1 bis 11,
**gekennzeichnet durch** ein Torsionsfederelement (12') zum Vorspannen des in die Entriegelungsstellung (ES) verstellten Riegelelements (11) in der Umfangsrichtung (21) in eine bevorzugte Schaltstellung, das sich einerseits am Riegelelement (11) oder am Schließzylinder (3) und andererseits am Schaltergehäuse (2) in der Umfangsrichtung (21) abstützt.

13. Schlüsselschalter nach Anspruch 12,
**dadurch gekennzeichnet,**
**dass** das Federelement (12) zum Vorspannen des Riegelelements (11) in dessen Verriegelungsstellung (VS) als Torsionsfeder ausgestaltet ist und das Torsionsfederelement (12') bildet.

14. Schlüsselschalter nach einem der Ansprüche 1 bis 13,
**dadurch gekennzeichnet,**
- **dass** das Schaltergehäuse (2) eine Zylinderöffnung (34) aufweist, durch die der Schließzylinder (3) axial in das Schaltergehäuse (2) eingeführt ist,
- **dass** das Schaltergehäuse (2) distal zur Zylinderöffnung (34) wenigstens eine radial nach innen vorstehende, radial federnde Raste (37) aufweist, die bei eingeführtem Schließzylinder (3) in eine am Schließzylinder (3) ausgebildete Ringnut (38) eingreift.

15. Schlüsselschalter nach einem der Ansprüche 1 bis 14,
**gekennzeichnet durch** eine elektrische Schalteinrichtung (6), die zum Umschalten der Schalteinrichtung (6) zwischen zwei den Schaltstellungen des Schließzylinders (3) zugeordneten Schaltzuständen mit dem Schließzylinder (3) gekoppelt ist.

## Claims

1. Key switch for safety-related applications, in particular for the deactivation of an airbag,
- with a switch housing (2),
- with a lock cylinder (3), which is rotatably arranged about a rotary axis (4) in the switch housing (2) and comprises an axial key opening (8) for axially inserting a key (5) and an insertion channel (9) open to the key opening (8),
- with a locking element (11) arranged in the switch housing (2), which can be switched by means of the key (5) from a locked position (VS) to an unlocked position (ES) and which is urged into the locked position (VS) by means of at least one spring element (12),
- wherein the lock cylinder (3) can be rotatably adjusted between a first shift position and a second shift position by means of the key (5), if the locking element (11) is in the unlocked position (ES),
- wherein the lock cylinder (3) is secured against rotating with respect to the switch housing (2) by the locking element (11) placed in the locked position (VS),
- wherein the locking element (11) for shifting between the locked position (VS) and the unlocked position (ES) is arranged axially slide-adjustable with respect to the switch housing (2) and with respect to the lock cylinder (3),
- wherein the lock cylinder (3) comprises at least one radial guide opening (10) which is open to the insertion channel (9),
- wherein the locking element (11) comprises at least one retaining contour (13) radially protruding through the respective guide opening (10) into the insertion channel (9),
- wherein the locking element (11) is slide-adjustably guided via the respective retaining contour (13) in the respective guide opening (10) at the lock cylinder (3) parallel to the rotary axis (4) and is secured against rotating about the rotary axis (4),
**characterized in that**
the locking element (11) has a ring-shaped configuration and is coaxially arranged with respect to the lock cylinder (3) and surrounds the lock cylinder (3).

2. Key switch according to claim 1,
**characterized in that**
the respective retaining contour (13) comprises at least two different retaining geometries (14, 14') adapted to different keys (5, 5') and defining different insertion depths (15, 15') for the respective keys (5, 5') that the respective key (5, 5') has to be inserted into the locking element (11), before, via the respective retaining geometry (14, 14'), the locking element (11) is shifted on further insertion of the key (5, 5').

3. Key switch according to any of the preceding claims,
**characterized in that**
- the locking element (11) comprises at least one locking contour (16) radially engaging with a locking link (17) provided at an inner side (18) of the switch housing (2) facing the lock cylinder (3),
- the respective locking link (17) comprises two engagement areas (20) spaced apart from each other in the circumferential direction (21) and associated with the two shift positions,
- the respective locking contour (16) in the locked position (VS) engages in one shift position with one of the engagement areas (20) and engages in the other shift position with the other engagement area (20) and is secured therein against rotating about the rotary axis (4) with respect to the switch housing (2).

4. Key switch according to claim 3,
**characterized in that**
the respective locking link (17) comprises in the circumferential direction (21) between the two engagement areas (20) a diversion area (22) axially adjusted with respect to the engagement areas (20), which guides the locking contour (16) sliding therefrom to one or the other engagement area (20), depending on the rotary direction.

5. Key switch according to claim 4,
**characterized in that**
the respective diversion area (22) comprises either two opposed ramps (23) extending from a shared edge (24) in the circumferential direction (21), and axially, or comprises only one ramp (23') extending in the circumferential direction (21), starting at one engagement area (20) and ending at the other engagement area (20), wherein the respective ramp (23, 23') guides the locking contour (16) sliding therefrom to the respective engagement area (20).

6. Key switch according to claim 4 or 5,
**characterized in that**
the respective engagement area (20) merges via an axially extending guide area (25) into the diversion area (22), which in particular axially guides the locking contour (16) sliding from the respective ramp (23) to the respective engagement area (20).

7. Key switch according to any of the preceding claims,
**characterized in that**
- the ring-shaped locking element (11) comprises two diametrically opposite retaining contours (13),
- two separate, diametrically opposite guide openings (10) are provided at the lock cylinder (3),
- each retaining contour (13) engages with one of the guide openings (10) and protrudes into the insertion channel (9).

8. Key switch according to any of the preceding claims,
**characterized in that**
- the ring-shaped locking element (11) comprises two diametrically opposite locking contours (16),
- two diametrically opposite locking links (17) are configured at the inner side (18) of the switch housing (2),
- each locking contour (16) cooperates with one of the locking links (17).

9. Key switch according to any of the preceding claims,
**characterized in that**
the ring-shaped locking element (11) comprises a ring body (29) from which the respective retaining contour (13) radially protrudes inwardly and from which the respective locking contour (16) radially protrudes outwardly in the area of the retaining contour (13).

10. Key switch according to any of claims 1 to 9,
**characterized in that**
the lock cylinder (3) comprises a front disc (30) including the key opening (8) at the back side (31) of which the insertion channel (9) is arranged, wherein the locking element (11) in its locked position (VS) axially abuts the back side (31) of the front disc (30).

11. Key switch according to any of the preceding claims,
**characterized in that**
the spring element (12) for preloading the locking element (11) in its locking position (VS) is configured as a compression spring which is coaxially arranged with respect to the rotary axis (4) on the outside of lock cylinder (3), and which is axially supported on one side by the locking element (11) and on the other side by the switch housing (2), or by the lock cylinder (3).

12. Key switch according to any of claims 1 to 11,
**characterized by** a torsion spring element (12') for preloading the locking element (11) in the unlocked position (ES) in the circumferential direction (21) to a preferred switch position, which is supported on the one hand by the locking element (11) or the lock cylinder (3) and on the other hand by the switch housing (2) in the circumferential direction (21).

13. Key switch according to claim 12,
**characterized in that**
the spring element (12) for preloading the locking element (11) in its locking position (VS) is configured as a torsion spring and forms the torsion spring element (12').

14. Key switch according to any of claims 1 to 13,
**characterized in that**
- the switch housing (2) comprises a cylinder opening (34) through which the lock cylinder (3) is axially inserted into the switch housing (2),
- the switch housing (2) comprises distal to the cylinder opening (34) at least one radially protruding inwards, radially springy catch (37) which engages with a ring groove (38) at the lock cylinder (3) when the lock cylinder (3) has been inserted.

15. Key switch according to any of claims 1 to 14,
**characterized by** an electric switching device (6) coupled to the lock cylinder (3) for switching the switching device (6) between two switching positions associated with the switching positions of the lock cylinder (3).

## Revendications

1. Interrupteur à clé pour des applications importantes en matière de sécurité, en particulier servant à désactiver un coussin gonflable de sécurité,
- avec un boîtier d'interrupteur (2),
- avec un cylindre de fermeture (3), qui est disposé de manière à pouvoir tourner autour d'un axe de rotation (4) dans le boîtier d'interrupteur (2), une ouverture de clé (8) axiale servant à introduire de manière axiale une clé (5) et un canal d'introduction (9) ouvert en direction de l'ouverture de clé (8),
- avec un élément à verrou (11) disposé dans le boîtier d'interrupteur (2), lequel peut être transféré, au moyen de la clé (5), d'une position de verrouillage (VS) dans une position de déverrouillage (ES) et qui est entraîné au moyen au moins d'un élément de ressort (12) dans la position de verrouillage (VS),
- dans lequel le cylindre de fermeture (3) peut être ajusté par rotation au moyen de la clé (5) entre une première position d'activation et une deuxième position d'activation lorsque l'élément à verrou (11) est ajusté dans la position de déverrouillage (ES),
- dans lequel le cylindre de fermeture (3) est empêché par l'élément à verrou (11) ajusté dans la position de verrouillage (VS) de tourner par rapport au boîtier d'interrupteur (2),
- dans lequel l'élément à verrou (11) destiné à être ajusté entre la position de verrouillage (VS) et la position de déverrouillage (ES) est disposé de manière à pouvoir être ajusté axialement dans le sens du levage par rapport au boîtier d'interrupteur (2) et par rapport au cylindre de fermeture (3),
- dans lequel le cylindre de fermeture (3) présente au moins une ouverture de guidage (10) radiale ouverte en direction du canal de guidage (9),
- dans lequel l'élément à verrou (11) présente au moins un contour entraîneur (13), qui fait saillie dans le canal d'introduction (9) de manière radiale à travers l'ouverture de guidage (10) respective,
- dans lequel l'élément à verrou (11) est guidé de manière à pouvoir être ajusté dans le sens du levage de manière parallèle par rapport à l'axe de rotation (4) par l'intermédiaire du contour entraîneur (13) respectif dans l'ouverture de guidage (10) respective au niveau du cylindre de fermeture (3) et est empêché de tourner autour de l'axe de rotation (4),
**caractérisé en ce**
**que** l'élément à verrou (11) est configuré de manière à présenter une forme annulaire et est disposé de manière coaxiale par rapport au cylindre de fermeture (3) et entoure le cylindre de fermeture (3).

2. Interrupteur à clé selon la revendication 1,
**caractérisé en ce**
**que** le contour entraîneur (13) respectif présente au moins deux géométries entraîneuses (14, 14') différentes, qui sont adaptées à des clés (5, 5') différentes et qui définissent différentes profondeurs d'introduction (15, 15') pour les clés (5, 5') respectives, sur lesquelles la clé (5, 5') respective doit être introduite dans l'élément à verrou (11) jusqu'à ce que l'élément à verrou (11) soit entraîné lors de la poursuite de l'introduction de la clé (5, 5') par l'intermédiaire de la géométrie entraîneuse (14, 14') respective.

3. Interrupteur à clé selon l'une quelconque des revendications précédentes, **caractérisé en ce**
- **que** l'élément à verrou (11) présente au moins un contour de verrou (16), qui vient en prise de manière radiale avec une coulisse de verrou (17), qui est réalisée au niveau d'un côté intérieur (18), tourné vers le cylindre de fermeture (3), du boîtier d'interrupteur (2),
- **que** la coulisse de verrou (17) respective présente deux zones de prise (20) espacées l'une de l'autre dans la direction périphérique (21), associées aux deux positions d'activation,
- **que** le contour de verrou (16) respectif dans la position de verrouillage (VS) vient en prise dans l'une des positions d'activation avec l'une des zones de prise (20) et dans l'autre position d'activation avec l'autre zone de prise (20) et est empêché dans cette dernière de tourner par rapport au boîtier d'interrupteur (2) autour de l'axe de rotation (4).

4. Interrupteur à clé selon la revendication 3,
**caractérisé en ce**
**que** la coulisse de verrou (17) respective présente dans la direction périphérique (21) entre les deux zones de prise (20) une zone de déviation (22) décalée de manière axiale par rapport aux zones de prise (20), laquelle amène le contour de verrou (16) glissant de manière déviée sur cette dernière selon la direction de rotation à l'une ou à l'autre zone de prise (20).

5. Interrupteur à clé selon la revendication 4,
**caractérisé en ce**
**que** la zone de déviation (22) respective possède soit deux rampes (23) de sens contraire, qui s'étendent dans la direction périphérique (21) en partant d'une arête (24) commune et de manière axiale, soit seulement une rampe (23'), qui s'étend dans la direction périphérique (21), qui débute au niveau de l'une des zones de prise (20) et qui s'arrête à l'autre zone de prise (20), dans lequel la rampe (23 ; 23') respective amène le contour de verrou (16) glissant de manière déviée au niveau de celle-ci à la zone de prise (20) respective.

6. Interrupteur à clé selon la revendication 4 ou 5,
**caractérisé en ce**
**que** la zone de prise (20) respective devient la zone de déviation (22) en passant par une zone de guidage (25) s'étendant de manière axiale, laquelle transfère en particulier le contour à verrou (16) glissant de manière déviée au niveau de la rampe (23) respective de manière axiale dans la zone de prise (20) respective.

7. Interrupteur à clé selon l'une quelconque des revendications précédentes, **caractérisé en ce**
- **que** l'élément à verrou (11) de forme annulaire présente deux contours entraîneurs (13) diamétralement opposés,
- **que** deux ouvertures de guidage (10) séparées, diamétralement opposées sont prévues au niveau du cylindre de fermeture (3),
- **que** chaque contour entraîneur (13) vient en prise avec une des ouvertures de guidage (10) et fait saillie dans le canal d'introduction (9).

8. Interrupteur à clé selon l'une quelconque des revendications précédentes, **caractérisé en ce**
- **que** l'élément à verrou (11) de forme annulaire présente deux contours de verrou (16) diamétralement opposés,
- **que** deux coulisses de verrou (17) diamétralement opposées sont réalisées au niveau du côté intérieur (18) du boîtier d'interrupteur (2),
- **que** chaque contour de verrou (16) coopère avec une des coulisses de verrou (17).

9. Interrupteur à clé selon l'une quelconque des revendications précédentes,
**caractérisé en ce**
**que** l'élément à verrou (11) de forme annulaire présente un corps annulaire (29), duquel dépasse radialement vers l'intérieur le contour entraîneur (13) respectif et duquel dépasse radialement vers l'extérieur le contour de verrou (16) respectif dans la zone du contour entraîneur (13).

10. Interrupteur à clé selon l'une quelconque des revendications 1 à 9,
**caractérisé en ce**
**que** le cylindre de fermeture (3) présente un disque frontal (30) contenant l'ouverture de clé (8), au niveau du côté arrière (31) duquel est disposé le canal d'introduction (9), dans lequel l'élément à verrou (11) repose, dans sa position de verrouillage (VS), de manière axiale au niveau du côté arrière (31) du disque frontal (30).

11. Interrupteur à clé selon l'une quelconque des revendications précédentes,
**caractérisé en ce**
**que** l'élément formant ressort (12) servant à précontraindre l'élément à verrou (11) dans sa position de verrouillage (VS) est configuré sous la forme d'un ressort hélicoïdal de compression, qui est disposé à l'extérieur au niveau du cylindre de fermeture (3) de manière coaxiale par rapport à l'axe de rotation (4) et qui prend appui de manière axiale du côté d'une extrémité au niveau de l'élément à verrou (11) et du côté de l'autre extrémité au niveau du boîtier d'interrupteur (2) ou au niveau du cylindre de fermeture (3).

12. Interrupteur à clé selon l'une quelconque des revendications 1 à 11,
**caractérisé par** un élément formant ressort de torsion (12') servant à précontraindre l'élément à verrou (11) ajusté dans la position de déverrouillage (ES) dans la direction périphérique (21) dans une position d'activation préférée, lequel prend appui d'une part au niveau de l'élément à verrou (11) ou au niveau du cylindre de fermeture (3) et d'autre part au niveau du boîtier d'interrupteur (2) dans la direction périphérique (21).

13. Interrupteur à clé selon la revendication 12,
**caractérisé en ce**
**que** l'élément formant ressort (12) servant à précontraindre l'élément formant verrou (11) dans sa position de verrouillage (VS) est configuré sous la forme d'un ressort de torsion et forme l'élément formant ressort de torsion (12').

14. Interrupteur à clé selon l'une quelconque des revendications 1 à 13,
**caractérisé en ce**
- **que** le boîtier d'interrupteur (2) présente une ouverture de cylindre (34), par laquelle le cylindre de fermeture (3) est introduit de manière axiale dans le boîtier d'interrupteur (2),
- **que** le boîtier d'interrupteur (2) présente, de manière distale par rapport à l'ouverture de cylindre (34), au moins un cran (37) faisant saillie radialement vers l'intérieur, sur ressorts radialement, qui vient en prise avec une rainure annulaire (38) réalisée au niveau du cylindre de fermeture (3) lorsque le cylindre de fermeture (3) est introduit.

15. Interrupteur à clé selon l'une quelconque des revendications 1 à 14,
**caractérisé par** un dispositif d'activation (6) électrique, qui est couplé au cylindre de fermeture (3) afin de commuter le dispositif d'activation (6) entre deux états d'activation associés aux positions d'activation du cylindre de fermeture (3).
